# EUROPÄISCHE PATENTSCHRIFT

(11) **EP 2 179 346 B1**
(45) Veröffentlichungstag und Bekanntmachung des Hinweises auf die Patenterteilung: **19.04.2017**
(21) Anmeldenummer: 08749468.8
(22) Anmeldetag: 09.05.2008
(51) Int. Cl.: G06F 3/0488, G06F 3/041, B60K 35/00, B60K 37/00

(54) **ANZEIGE- UND BEDIENVORRICHTUNG FÜR EIN KRAFTFAHRZEUG MIT EINER MULTI-VIEW-ANZEIGEVORRICHTUNG**
DISPLAY DEVICE AND OPERATOR PANEL FOR A MOTOR VEHICLE, COMPRISING A MULTI-VIEW DISPLAY DEVICE
DISPOSITIF DE VISUALISATION ET DE COMMANDE POUR VÉHICULE AUTOMOBILE, À DISPOSITIF DE VISUALISATION MULTIVUES

(30) Priorität: 19.07.2007 DE 102007034272
(43) Veröffentlichungstag der Anmeldung: 28.04.2010
(73) Patentinhaber: Volkswagen Aktiengesellschaft, 38440 Wolfsburg (DE)
(72) Erfinder: BACHFISCHER, Katharina, 40476 Düsseldorf (DE); WÄLLER, Christoph, 38102 Braunschweig (DE); BOHRER, Lorenz, 10623 Berlin (DE)
(74) Vertreter: Obst, Bernhard
(86) Internationale Anmeldenummer: PCT/EP2008/003934
(87) Internationale Veröffentlichungsnummer: WO 2009/010114

(56) Entgegenhaltungen:
- WO-A-2004/081777
- WO-A1-2006/046783
- DE-A1-102005 035 111
- DE-B3-102005 019 871
- JP-A- 2007 099 191
- US-A1- 2005 278 083
- US-A1- 2006 161 440
- US-A1- 2007 033 043
- US-A1- 2007 129 864
- US-A1- 2008 068 284
- BERKEL VAN C ED - SOCIETY FOR INFORMATION DISPLAY: "3D TOUCHLESS DISPLAY INTERACTION" 2002 SID INTERNATIONAL SYMPOSIUM DIGEST OF TECHNICAL PAPERS. BOSTON, MA, MAY 21 - 23, 2002; [SID INTERNATIONAL SYMPOSIUM DIGEST OF TECHNICAL PAPERS], SAN JOSE, CA : SID, US, Bd. 33, Nr. 2, 1. Mai 2002 (2002-05-01), Seiten 1410-1413, XP001134343

## Beschreibung

Die Erfindung betrifft ein Anzeige- und Bediensystem für ein Kraftfahrzeug, umfassend eine Multi-View-Anzeigevorrichtung, mittels der zeitgleich mindestens zwei unterschiedliche Darstellungen für eine Betrachtung aus unterschiedlichen Betrachtungswinkelbereichen anzeigbar sind, eine Bedienvorrichtung zum Erfassen von Nutzereingaben und eine Detektionseinheit, die eine Annäherung eines Betätigungselements an die Bedienvorrichtung detektiert und das Betätigungselement einem der Betrachtungswinkelbereiche zuordnet, so dass eine mittels der Bedienvorrichtung erfasste Betätigungshandlung des Betätigungselements ebenfalls einem der mindestens zwei unterschiedlichen Betrachtungswinkelbereiche zuordenbar ist.

Anzeige- und Bediensysteme, die eine Anzeigevorrichtung und eine Bedienvorrichtung mit in der Regel einem oder mehreren Bedienelementen aufweisen, sind aus dem Stand der Technik bekannt. Ebenso sind solche Systeme mit Anzeigeeinheiten bekannt, die unterschiedliche Darstellungen in unterschiedlichen Betrachtungswinkelbereichen anzeigen. Solche Anzeigevorrichtungen sind unter dem Begriff Dual-View-Display bei zwei Betrachtungswinkelbereichen und sonst allgemein als Multi-View-Display bekannt. Sie bestehen beispielsweise aus einem als Flüssigkristallzelle ausgebildeten Dotmatrix-Display, vor das ein als Zylinderlinsenraster ausgebildetes optisches Element angeordnet ist. Solche Anzeigeeinheiten werden beispielsweise in Kraftfahrzeugen auf der Mittelkonsole angeordnet und ermöglichen es, dass der Fahrer und der Beifahrer aufgrund der unterschiedlichen Blickwinkel zur gleichen Zeit unterschiedliche Darstellungen auf der Anzeigefläche sehen können. Für den Fahrer können dies verkehrsrelevante oder fahrzeugbezogene Informationen sein, während dem Beifahrer beispielsweise Multimediainformationen dargeboten werden.

Eine solche Anzeigevorrichtung ist beispielsweise in der DE 101 40 688 beschrieben.

Da ein Bauraum in einem Kraftfahrzeug beschränkt ist, ist es wünschenswert, die Bedienelemente der Bedienvorrichtung sowohl für Betätigungshandlungen des Fahrers als auch Betätigungshandlungen des Beifahrers zu nutzen. Die den einzelnen Bedienelementen zugeordneten, von diesen auszulösenden bzw. zu bedienenden Funktionen sind ihnen jeweils kontextbezogen zugeordnet. Wird dem Fahrer beispielsweise eine Darstellung eines Navigationssystems angezeigt, in der eine Zieleingabe erfolgen kann, so wird ein beispielsweise als Drehdrücksteller ausgebildetes Bedienelement der Bedienvorrichtung verwendet, um aus einer Liste von angezeigten Zielen ein entsprechendes Ziel auszuwählen. Gleichzeitig wird dem Beifahrer durch eine Multimediaanwendung beispielsweise eine Titelliste angezeigt, aus der er einen auszugebenden Musiktitel mittels desselben Drehdrückstellers auswählen kann. Da die Darstellungskontexte für den Fahrer und den Beifahrer, d.h. für unterschiedliche Betrachtungswinkelbereiche, unterschiedlich sind, unterscheiden sich auch die der Bedienvorrichtung bzw. einem der Bedienelemente zugeordneten Funktionen, die durch eine Betätigung des Fahrers oder eine Betätigung des Beifahrers bedient bzw. ausgelöst werden sollen, abhängig von dem jeweilig dargestellten Kontext.

Um eine solche Doppelnutzung möglich zu machen, ist in der DE 10 2005 035 111 A1 ein Bedien- und Anzeigesystem für ein Fahrzeug mit einer zentral angeordneten optischen Anzeigeeinheit beschrieben, welche zeitgleich zwei unterschiedliche Darstellungen für unterschiedliche Betrachtungswinkelbereiche anzeigt. Es sind eine zentral angeordnete Bedienvorrichtung und eine Detektoreinheit vorhanden, welche eine Annäherung an die zentrale Bedienvorrichtung und eine Betätigungshandlung der zentralen Bedienvorrichtung detektiert und die erkannte Betätigungshandiung einem ersten Winkelbereich oder einem zweiten Winkelbereich zuordnet. Die Detektionseinheit umfasst hierfür zumindest einen Sender an zumindest einem der Sitze von Fahrer und Beifahrer sowie einen Sensor in oder in der Nähe der zentralen Bedienvorrichtung zur Erfassung von Kapazitätsänderungen bei Annäherung an die zentrale Bedienvorrichtung vor oder bei Betätigungshandlungen. Die Detektoreinheit ist somit in der Lage, berührungslos eine Annäherung eines Fahrers und/oder eines Beifahrers zu erfassen. Werden über den Fahrersitz und über den Beifahrersitz unterschiedliche hochfrequente Signale in den Fahrer und den Beifahrer eingekoppelt, so können Sensoren bei einer Annäherung über eine Kapazitätsänderung, die einer empfangenen Signalstärke entspricht, und eine detektierte Frequenz den Fahrer und den Beifahrer unterscheiden. Hierdurch wird es möglich, Betätigungshandlungen dem Fahrer oder dem Beifahrer bzw. einem Betrachtungswinkelbereich zuzuordnen, sofern man dem Fahrer und dem Beifahrer den Betrachtungswinkelbereich zuordnet, in dem der jeweilige Sitz, d.h. der Fahrersitz oder der Beifahrersitz, angeordnet sind. Über den Betrachtungswinkelbereich ist somit ebenfalls eine Fahrzeugseitenzuordnung möglich.

Die grundlegende Technologie zum Übertragen hochfrequenter Signale über einen Körper eines Nutzers und eine kapazitive Erfassung des übertragenen Signals mittels eines Sensors ist in der WO 2004/078536 beispielhaft erläutert.

Bei dem aus der DE 10 2005 035 111 bekannten Anzeige- und Bediensystem sind jedoch die Situationen unbefriedigend gelöst, in denen die Bedienvorrichtung mehrere Bedienelemente aufweist oder als berührungsempfindliche positionsbestimmende Erfassungseinheit ausgebildet ist, beispielsweise mit der Anzeigefläche gemeinsame als Touchscreen ausgebildet ist. Bei solchen Bedienvorrichtungen ist es grundsätzlich möglich, dass mehrere Betätigungshandlungen, beispielsweise über unterschiedliche Bedienelemente der Bedienvorrichtung, zeitgleich und sogar von verschiedenen Benutzern ausgeführt werden. Bei dem bekannten System ist eine solche zeitgleiche Mehrfachbedienung nicht befriedigend gelöst.

Die DE 10 2005 019 871 B3 beschreibt eine Anordnung zur Bedienung elektronischer Geräte in einem Fahrzeug. Die Anordnung verfügt über eine Recheneinheit, die mit einer Speichereinheit, einer Bedieneinrichtung und einer Anzeigeeinrichtung verbunden ist. Die Recheneinheit bringt eine aus der Speichereinheit ausgelesene und aus mindestens zwei Anzeigeelementen bestehende erste Bediendarstellung auf der Anzeigeeinrichtung zur Anzeige, wertet einen mittels der Bedieneinrichtung vorgenommenen Bedienvorgang aus und liest eine dem Bedienvorgang zugeordnete zweite Bediendarstellung aus der Speichereinrichtung aus. Zur Verbesserung der Erfassbarkeit des Zusammenhang zwischen der ersten und der zweiten Bediendarstellung ist mindestens eines der Anzeigeelemente aus der ersten Bediendarstellung auch in der zweiten Bediendarstellung enthalten, wobei sich das mindestens eine Anzeigeelement in der ersten Bediendarstellung in mindestens einer seiner Anzeigeeigenschaften von der zweiten Bediendarstellung unterscheidet. Die Recheneinheit nimmt eine sukzessive Transformation des mindestens einen Anzeigeelements von der ersten zur zweiten Bediendarstellung vor und bringt sie zur Anzeige.

Aus der US 2007/0129864 A1 ist eine Anzeigevorrichtung in einem Fahrzeug bekannt, die in unterschiedlichen Betrachtungswinkelbereichen unterschiedliche Inhalte anzeigt. Ein weiteres Multi-View-Anzeigegerät ist aus der WO 2004/081777 A1 bekannt.

JP-2007-099191 beschreibt einen Datenprozessor. Auf einer Festplatte ist ein Programm gespeichert, dass im Zusammenwirken mit einer integrierten Prozessor steuert, wie eine erfasste Berührposition auf einer Flüssigkristallanzeige, die von Näherungssensoren, die um die Flüssigkristallanzeige angeordnet sind, erfasst ist, weiterverarbeitet wird. Wird eine Annährung von der Fahrerseite erfasst, werden Bedienelemente für einen Fahrer eingeblendet, wird eine Annäherung von einer Beifahrerseite erfasst, werden Bedienelemente für den Beifahrer angezeigt.

Aus der US 2008/0068284 A1 ist eine Vorrichtung zum Darstellen von unterschiedlichen Informationen für mehrere Benutzer auf einer gemeinsamen Anzeigeeinrichtung bekannt. Um Fehlbedienungen zu vermeiden, wird eine bevorzugte Darstellung ("priority image") ausgewählt. Nach der Auswahl können nur zur der bevorzugten Darstellung Eingaben getätigt werden. Die jeweils bevorzugte Darstellung wird den Benutzern in ihren Darstellungen zur Kennzeichnung angezeigt.

Aufgabe der Erfindung ist es daher, ein verbessertes Anzeige- und Bediensystem zu schaffen, mit dem auch in Situationen, in denen Personen, die unterschiedlichen Betrachtungswinkelbereichen zugeordnet sind, ein Betätigungselement der Bedienvorrichtung annähern, eine zuverlässige Bedienung der über das Anzeige- und Bediensystem zu bedienenden Funktionen und Fahrzeugsysteme möglich ist.

Die technische Aufgabe wird erfindungsgemäß durch einen Gegenstand mit den Merkmalen des Patentanspruchs 1 gelöst. Vorteilhafte Ausgestaltungen der Erfindung ergeben sich aus den Unteransprüchen.

Hierfür ist bei einer Anzeige- und Bedienvorrichtung eingangs genannter Art vorgesehen, dass zumindest in der Darstellung, die für den Betrachtungswinkelbereich angezeigt wird, dem eine erfolgende Betätigung der Bedienvorrichtung zugeordnet wird, eine diese Zuordnung kennzeichnende Aktivierungsinformation grafisch angezeigt wird. Durch die Darstellung der Aktivierungsinformation ist es dem Nutzer möglich zu erkennen, dass er als aktiver Benutzer von dem Anzeige- und Bediensystem erkannt ist. Hieraus kann er schlussfolgern, dass seine Betätigungshandlung ihm zugeordnet wird, so dass die Bedienvorrichtung der Funktion "zugeordnet" ist, die dem für diesen Nutzer sichtbaren Darstellungskontext zugeordnet ist. In dem oben beschriebenen Beispiel kann der Beifahrer, wenn in seiner Darstellung, d.h. der Darstellung für den Betrachtungswinkelbereich, in dem der Beifahrersitz liegt, eine Aktivierungsinformation angezeigt ist, die ihn als Beifahrer als aktiven Nutzer der Bedienvorrichtung kennzeichnet, sicher sein, dass über ein Betätigen des Drehdrückstellers die Titelauswahl in dem Multimediamenü erfolgt. Andererseits kann der Fahrer, wenn eine Aktivierungsinformation, die ihn, den Fahrer, als aktiven Nutzer der Bedienvorrichtung kennzeichnet, in der Darstellung angezeigt wird, in deren Betrachtungswinkelbereich der Fahrersitz liegt, sicher sein, dass eine Betätigungshandlung der Bedienvorrichtung durch ein Betätigungselement, beispielsweise seine rechte Hand, eine Auswahl des Zielortes bewirken wird. Das Anzeige- und Bediensystem liefert somit eine Rückmeldung, anhand derer der Nutzer erkennen kann, ob er aktiv über die Bedienvorrichtung den ihm in der Darstellung angezeigten Bedienkontext beeinflussen kann oder nicht. Insbesondere in Situationen, in denen zwei Nutzer, die sich in unterschiedlichen Betrachtungswinkelbereichen befinden, ein Betätigungselement, beispielsweise ihre Hand oder einen Finger, der Bedienvorrichtung annähern, ist es möglich zu erkennen, ob man selbst über die Bedienvorrichtung aktiv Funktionen des einem selbst angezeigten Darstellungskontext beeinflussen kann oder nicht.

Insbesondere für solchen Situationen, in denen mindestens zwei Nutzer, beispielsweise der Fahrer und der Beifahrer, ihre Hand der Bedienvorrichtung annähern oder angenähert haben, ist es vorgesehen, dass in beiden Darstellungen grafisch mittels einer Aktivierungsinformation jeweils angezeigt ist, wem eine erfolgende Betätigungshandlung der Bedienvorrichtung zugeordnet wird. Hierüber sind auch Situationen zu erkennen, in denen das Anzeige- und Bediensystem beispielsweise keinen der Nutzer als aktiven Nutzer erkennt. Jeder der beiden Nutzer würde dieses daran erkennen, dass keine Aktivierungsinformationen in seiner jeweiligen Darstellung angezeigt werden, die angeben, wem eine erfolgende Betätigungshandlung zugeordnet würde.

Um die Aktivierungsinformation möglichst einfach erfassbar zu gestalten, ist bei einer bevorzugten Ausführungsform vorgesehen, dass die Anzeige der Zuordnung über die Aktivierungsinformation jeweils an einer Position in den Darstellungen bezüglich einem Mittelpunkt der entsprechenden Darstellung erfolgt, die mit einer Betrachtungsposition bezogen auf einen Mittelpunkt der Anzeigefläche in dem entsprechenden der Darstellung zugeordneten Betrachtungswinkelbereich in einer parallel zur Anzeigefläche ausgebildeten Betrachtungsebene korrespondiert. Dies bedeutet, dass die Aktivierungsinformation in der Darstellung oder den Darstellungen beispielsweise auf der rechten Seite der Darstellung angezeigt wird, wenn die Betätigungshandlung dem Betrachtungswinkelbereich zugeordnet ist, der für eine Betrachtung der Anzeigevorrichtung von der rechten Fahrzeugseite relevant ist. Wird die Betätigungshandlung hingegen dem anderen Betrachtungswinkelbereich zugeordnet, der eine Betrachtung der anderen Darstellung von der linken Fahrzeugseite ermöglicht, so wird die Aktivierungsinformation auf der linken Seite der Darstellung angezeigt. Darüber hinaus kann die Aktivierungsinformation farblich gekennzeichnet sein, um die unterschiedlichen Betrachtungswinkelbereiche bzw. unterschiedlichen Nutzer sowie deren Aktivierungszustand zu kennzeichnen. Zusätzlich zu der seitenbezogenen Darstellung der Aktivierungsinformation kann zusätzlich eine Farbinformation verwendet werden, um einen Zustand, in dem die eigene Aktivierung in der Darstellung angezeigt wird, von der Darstellung der Aktivierungsinformationen zu unterscheiden, in denen einem die Aktivierung des anderen Nutzers in der eigenen Darstellung angezeigt wird.

Bei einer bevorzugten Ausführungsform der Erfindung umfasst die Bedienvorrichtung eine berührungsempfindliche positionsbestimmende Erfassungseinheit, die gemeinsam mit der Anzeigefläche zu einem Touchscreen gekoppelt ist. Eine solche Ausführungsform des Anzeige- und Bediensystems bietet die Möglichkeit, besonders intuitiv ausgestaltete Benutzerschnittstellen zu erstellen. Auf der Anzeigefläche können in den Darstellungen so genannte virtuelle Bedienelemente angezeigt werden, die über eine Berührung des entsprechenden Darstellungsbereichs durch die Nutzer aktivierbar sind. Da für die unterschiedlichen Nutzer, die die Anzeigefläche aus unterschiedlichen Betrachtungswinkelbereichen betrachten, an derselben Stelle der Anzeigefläche abhängig von dem in der jeweiligen Darstellung angezeigten Bedienkontext unterschiedliche virtuelle Bedienelemente dargestellt werden können, ist eine Identifizierung des jeweiligen Nutzers bzw. eine Zuordnung zu dem jeweiligen Betrachtungswinkelbereich auch hier enorm wichtig. Um jedoch jederzeit in der Lage zu sein, als Fahrer die Kontrolle über das Anzeige- und Bediensystem als aktiver Nutzer zu erhalten oder einem Beifahrer die Möglichkeit zu eröffnen, den Fahrer bei der Bedienung von fahrzeugrelevanten Funktionen zu unterstützen, die in einem Bedienkontext angeordnet sind, dessen Darstellung in einem Multi-View-Modus im Betrachtungswinkelbereich des Fahrers angezeigt wird, ist bei einer bevorzugten Ausführungsform vorgesehen, dass in jeder der mindestens zwei Darstellungen an derselben Darstellungsposition auf der Anzeigefläche ein virtuelles Bedienelement angezeigt ist, mittels dessen Betätigung zwischen einem Mehrdarstellungsmodus (Multi-View-Modus), in dem in jeder der mindestens zwei Darstellungen unterschiedliche Informationen angezeigt sind, und einem Eindarstellungsmodus umgeschaltet werden kann, in dem in jeder der mindestens zwei Darstellungen dasselbe angezeigt wird. In dem einen Darstellungsmodus ist es dann sowohl dem Fahrer als auch dem Belfahrer quasi unabhängig von der durch die Detektionseinheit vorgenommenen Zuordnung der Betätigungshandlung zu einem Betrachtungswinkelbereich möglich, dieselben Funktionen zu aktivieren, deren virtuelle Bedienelemente in beiden Darstellungen an derselben Stelle angezeigt werden.

Auch in dem Mehrdarstellungsmodus gibt es Bediensituationen, in denen es vorteilhaft ist, dass dieselben Informationen in den mindestens zwei Darstellungen angezeigt werden. Dieses ist beispielsweise dann der Fall, wenn den gesamten Innenraum betreffende Funktionseinstellungen und/oder Funktionsauslösungen vorgenommen werden. Wird beispielsweise von einem der Nutzer über eine Titelliste (Playlist) ein neuer Musiktitel ausgewählt, der über das Audiosystem wiedergegeben werden soll, welches den gesamten Innenraum beschallt, so werden die diese Auswahl betreffenden Informationen bei einer bevorzugten Ausführungsform in jeder der mindestens zwei Darstellungen angezeigt. Eine besondere Ausführungsform sieht somit vor, dass Informationen über Funktionen, die den Fahrzeuginnenraum beeinflussen, jeweils in jeder der mindestens zwei Darstellungen angezeigt werden.

Für Funktionseinstellungen und/oder -änderungen, die nur eine Seite des Fahrzeugsinnenraums betreffen, ist es hingegen vorteilhaft, die entsprechenden Informationen in den mindestens zwei Darstellungen unterschiedlich darzustellen, sofern das Anzeige- und Bediensystem in dem Mehrdarstellungsmodus betrieben wird. Bevorzugt ist vorgesehen, dass Statusinformationen, die jeweils in allen der mindestens zwei Darstellungen angezeigt werden und die den Fahrzeuginnenraum nur seitenindividuell betreffen, bei einer Veränderung in der Darstellung des Betrachtungswinkelbereichs, der mit der beeinflussten Fahrzeugseite korrespondiert, stärker optisch hervorgehoben wird, als in den übrigen der mindestens zwei Darstellungen. Bei einem Fahrzeug, bei dem eine Innenraumtemperatur über eine Klimaanlage seitenindividuell festlegbar ist oder bei dem eine Heizstufe einer Sitzheizung fahrer- und beifahrerindividuell einstellbar ist, kann die neu ausgewählte Innentemperatur für die entsprechende Fahrzeugseite oder die gewählte Heizstufe in dem Betrachtungswinkelbereich, der mit der entsprechenden Fahrzeugseite korrespondiert, vergrößert, farblich hervorgehoben angezeigt werden, wohingegen in den übrigen der mindestens zwei Darstellungen, d.h. beispielsweise in dem Betrachtungswinkelbereich, der mit der anderen Fahrzeugseite korrespondiert, die Änderung nur farblich gekennzeichnet wird.

Zusätzlich zu einer haptischen Bedienung werden in Fahrzeugen auch vermehrt Bedienelemente eingesetzt, die eine Sprachsteuerung ermöglichen. Bei einer bevorzugten Weiterbildung der Erfindung ist vorgesehen, dass die Bedienvorrichtung ein Mikrofon und eine Spracherkennungseinheit umfasst, wobei mittels der Spracherkennung erfasste Betätigungshandlungen dem Betrachtungswinkel zugeordnet werden, dem das Betätigungselement zugeordnet wird, das an die positionsbestimmende Erfassungseinheit oder ein anderes Bedienelement der Bedienvorrichtung angenähert wird, die in einem Detektionsbereich der Detektionseinheit angeordnet sind. Mit dieser Weiterbildung der Erfindung ist somit eine so genannte Point-to-Talk-Bedienung möglich. Der Nutzer, der eine Eingabe tätigen will, nähert ein Betätigungselement, vorzugsweise seinen Finger, einem Bedienelement der Bedienvorrichtung an, welches im Detektionsbereich der Detektionseinheit liegt, die eine Nutzererkennung ermöglicht. Über die Spracherkennungseinheit erfasste Betätigungshandlungen werden dann dem Nutzer bzw. den entsprechenden Funktionen des Bedienkontextes zugeordnet, die mit dem Anzeige- und Bedienkontext korrespondieren, der in der Darstellung des entsprechenden Betrachtungswinkelbereichs, in dem sich der entsprechende Nutzer befindet bzw. aus dem er die Anzeigefläche betrachtet. Auch hier ist es erneut wichtig, dass der Nutzer anhand der Darstellung, die ihm angezeigt wird, erkennen kann, ob er derzeit der aktive Nutzer der Spracherkennung ist.

Die oben genannte technische Aufgabe lässt sich auch durch ein Anzeige- und Bediensystem für ein Kraftfahrzeug lösen, das eine Multi-View-Anzeigevorrichtung, mittels der zeitgleich mindestens zwei unterschiedliche Darstellungen für eine Betrachtung aus unterschiedlichen Betrachtungswinkelbereichen anzeigbar sind, eine Bedienvorrichtung zum Erfassen von Nutzereingaben und eine Detektionseinheit umfasst, die eine Annäherung eines Betätigungselements an die Bedienvorrichtung detektiert und das Betätigungselement einem der Betrachtungswinkelbereiche zuordnet, so dass eine mittels der Bedienvorrichtung erfasste Betätigungshandlung des Betätigungselements ebenfalls einem der unterschiedlichen Betrachtungswinkelbereiche zuordenbar ist und bei dem vorgesehen ist, dass die Detektionseinheit mehrere Sensoreinheiten umfasst, so dass eine Position eines sich annähernden Betätigungselements zusätzlich im Raum bestimmbar ist, so dass eine mittels der Bedienvorrichtung erfasste Betätigungshandlung über die ermittelte Position des Betätigungselements relativ zu der Bedienvorrichtung einem Betrachtungswinkelbereich zuordenbar oder zugeordnet ist, so dass eine Zuordnung zu einem Bedienelement der ohne eine explizite Rückmeldung über eine Darstellung von Aktivierungsinformationen realisierbar. Bei dieser Ausführungsform ist eine zeitgleiche Bedienung durch mehrere Nutzer möglich, da eine Zuordnung der Betätigungshandlungen über die erfasste Position des jeweiligen Betätigungselements zuverlässig möglich ist.

Besonders bevorzugt wird es, zusätzlich jedoch auch eine Aktivierungsinformation in den Darstellungen des jeweiligen Betrachtungswinkelbereiches vorzunehmen, für dessen Betätigungselement eine Position von einer Position eines anderen Betätigungselements ausreichend unterschiedlich erfasst ist, so dass eine Zuordnung zu einem Bedienelement der Bedienvorrichtung eindeutig möglich ist. Hierdurch werden Situationen, in denen beide Nutzer dasselbe Betätigungselement berühren und in denen eine Unterscheidung der Betätigungshandlungen nicht möglich ist, für den Nutzer in der grafischen Darstellung kenntlich gemacht.

Die Erfindung wird nachfolgend anhand bevorzugter Ausführungsbeispiele näher erläutert. Hierbei zeigen:
- Fig. 1: eine schematische Ansicht eines Kraftfahrzeugs mit einer Ausführungsform einer Anzeige- und Bedienvorrichtung;
- Fig. 2: schematische Ansichten der Darstellungen für unterschiedliche Betrachtungswinkelbereiche im Mehrdarstellungsmodus nach einer Ausführungsform;
- Fig. 3: weitere schematische Ansichten von Darstellungen im Mehrdarstellungsmodus;
- Fig. 4: schematische Ansichten von Darstellungen im Mehrdarstellungsmodus einer Ausführungsform, bei der die Aktivierungsinformationen nur in der Darstellung des "aktiven" Betrachtungswinkelbereich angezeigt werden;
- Fig. 5: schematische Ansichten von Darstellungen im Mehrdarstellungsmodus einer anderen Ausführungsform, bei der die Aktivierungsinformationen in beiden Darstellungen angezeigt werden;
- Fig. 6: schematische Ansichten von Darstellungen im Mehrdarstellungsmodus einer weiteren Ausführungsform, bei der die Aktivierungsinformationen in den Darstellungen beider Betrachtungswinkelbereiche angezeigt werden;
- Fig. 7: schematische Ansichten von Darstellungen im Mehrdarstellungsmodus einer Ausführungsform, bei der einen Fahrzeuginnenraum seitenindividuell beeinflussende Bedienhandlungen vorgenommen werden;
- Fig. 8: schematische Ansichten von Darstellungen im Mehrdarstellungsmodus einer weiteren Ausführungsform, bei der einen gesamten Fahrzeuginnenraum beeinflussende Bedienhandlungen vorgenommen werden;
- Fig. 9: schematische Ansichten von Darstellungen im Mehrdarstellungsmodus einer anderen Ausführungsform, bei der einen Fahrzeuginnenraum seitenindividuelle beeinflussende Bedienhandlungen vorgenommen wurden, deren Parameter als Statusinformationen in beiden Darstellungen angezeigt werden;
- Fig. 10: schematische Ansichten von Darstellungen im Mehrdarstellungsmodus einer Ausführungsform, bei der in beiden Darstellungen derselbe Bedienkontext angezeigt wird, wobei sich die Darstellungen dennoch für den Fahrer und den Beifahrer hinsichtlich ihres Informationsgehalts und ihrer Bedienoptionen unterscheiden;
- Fig. 11: schematische Ansichten von Darstellungen im Mehrdarstellungsmodus einer Ausführungsform mit einer sprachunterstützten Bedienung;
- Fig. 12: schematische Ansichten von Darstellungen im Mehrdarstellungsmodus einer Ausführungsform, bei der der Fahrer die Darstellung des Beifahrers als Ausschnitt eingeblendet angezeigt erhält; und
- Fig. 13: schematische Ansichten von Darstellungen im Mehrdarstellungsmodus einer Ausführungsform, bei der die jeweils angezeigten Anzeige- und Bedienkontexte für die Darstellung eines Betrachtungswinkelbereichs und die Darstellung eines anderen Betrachtungswinkelbereichs über Kontextauswahlbedienelemente angezeigt werden.

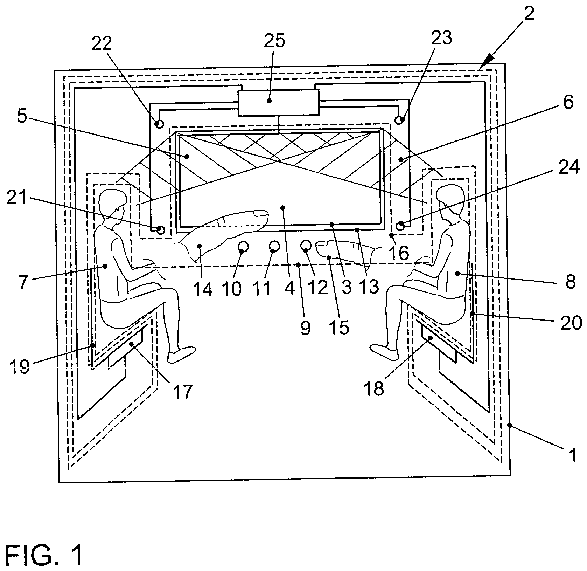

In Fig. 1 ist ein Kraftfahrzeug 1 mit einem Anzeige- und Bediensystem 2 schematisch dargestellt. Das Anzeige- und Bediensystem umfasst eine Anzeigevorrichtung 3 mit einer Anzeigefläche 4. Die Anzeigevorrichtung 3 ist so ausgestaltet, dass aus unterschiedlichen Betrachtungswinkelbereichen 5, 6 unterschiedliche Darstellungen sichtbar sind. Im Darstellungsbereich 5 betrachtet beispielsweise ein Fahrer 7 die Anzeigefläche 4. Die für ihn angezeigte Darstellung unterscheidet sich von einer anderen Darstellung, die einem Nutzer, beispielsweise dem Beifahrer 8, der die Anzeigefläche 4 aus dem Betrachtungswinkelbereich 6 betrachtet, dargestellt wird. Eine solche Anzeigevorrichtung 3 wird als Multi-View-Display oder Multi-View-Anzeige bezeichnet. Die Ausgestaltung solcher Anzeigevorrichtungen sind dem Fachmann wohl bekannt und hier nicht näher erläutert.

Die Anzeige- und Bedienvorrichtung 2 umfasst ferner eine Bedienvorrichtung 9. Die Bedienvorrichtung 9 umfasst in der dargestellten Ausführungsform mehrere in Hardware ausgebildete Bedienelemente 10-12, die beispielsweise als Tastschalter, Dreh-Drücksteller, Schieberegler, Kippschalter usw. ausgebildet sein können. Ferner umfasst die Bedienvorrichtung 9 eine berührungsempfindliche positionsbestimmende Erfassungseinheit 13, die mit der Anzeigefläche 4 der Anzeigevorrichtung 3 als Touchscreen ausgebildet ist. Diese positionsbestimmende Erfassungseinheit liefert die Koordinaten einer Berührposition bei einer durch eine Berührung mit einem Betätigungselement 14 oder 15 des Fahrers 7 bzw. Beifahrers 8 vorgenommenen Betätigungshandlung.

Um Betätigungshandlungen des Fahrers 7 von Betätigungshandlungen des Beifahrers 8 unterscheiden zu können, umfasst die Anzeige- und Bedienvorrichtung ferner eine Detektionseinheit 16. Die Detektionseinheit 16 umfasst Hochfrequenzsignalgeber 17, 18, die an einem Fahrersitz 19 und einem Beifahrersitz 20 entsprechend angeordnet sind. Die Signalgeber 17, 18 koppeln jeweils entsprechend ein Hochfrequenzsignal in den auf dem Fahrersitz 19 bzw. Beifahrersitz 20 sitzenden Fahrer 7 bzw. Beifahrer 8 ein. Die Hochfrequenzsignale des Signalgebers 17 und 18 unterscheiden sich, so dass unterschiedliche Hochfrequenzsignale, beispielsweise unterschiedlicher Frequenz und/oder Modulation, über den Fahrer 7 und den Beifahrer 8 übertragen werden. Benachbart zu der Anzeigefläche 4 sind Sensoren 21-24 angeordnet. Eine Annäherung des Betätigungselements 14 bzw. Betätigungselements 15 ändert eine kapazitive Kopplung des jeweiligen Betätigungselements 14, 15 mit den Sensoren 21-24. Die Änderung der kapazitiven Kopplung ist gleichbedeutend mit einer jeweils entsprechend empfangenen Signalstärke des übertragenen HF-Signals. Die empfangene Signalstärke eines jeden der Sensoren 21-24 ist zugleich ein Maß für eine Entfernung des Betätigungselements 14, 15 von dem entsprechenden Sensor. Über eine Triangulation ist es einer Auswerteeinheit 25 somit möglich, die Position des Betätigungselements 14 des Fahrers 7 bzw. des Betätigungselements 15 des Beifahrers 8 im Raum vor der Anzeigefläche 4 zu ermitteln. Hierüber ist es möglich, eine von dem Betätigungselement 14 des Fahrers 7 vorgenommene Betätigungshandlung, die mittels eines der Bedienelemente 10-12 bzw. der berührungsempfindlichen positionsbestimmenden Erfassungseinheit 13 erfasst wird, von einer Betätigungshandlung des Betätigungselements 15 des Beifahrers 8 zu unterscheiden.

Die Detektionseinheit kann bei einer anderen Ausführungsform neben oder alternativ zu Sensoreinheiten, die einen Körperteil aufgrund der Übertragung von Hochfrequenzsignalen über den menschlichen Körper detektieren, andere berührungslos funktionierende Sensoreinheiten, die eine Kamera-basiertes Verfahren oder optische Verfahren verwenden. Solche nach einem optischen Verfahren arbeitende Sensoreinheiten können beispielsweise jeweils gemäß folgendem Prinzip ausgestaltet sein. Eine Sende-LED strahlt ein rechteckförmig amplitudenmoduliertes Lichtsignal im optischen oder infraroten Wellenlangenbereich ab. Das an einem Objekt reflektierte Lichtsignal wird von einer Photodiode erfasst. Von einer Kompensations-LED wird ein um 180° phasenversetztes ebenfalls rechteckförmig amplitudenmoduliertes Referenzlichtsignal zu der Photodiode über einen unveränderlichen Lichtweg gesandt. Die Kompensations-LED wird über einen Regelkreis mittels eines Regelsignals so ausgeregelt, dass sich das empfangene reflektierte Lichtsignal der Sende-LED und das empfangene Referenzlichtsignal der Kompensations-LED an der Photodiode aufheben und ein Gleichsignal detektiert wird. Eine Änderung des Regelsignals ist ein Maß für den Abstand des Objekts. Eine nach diesem Prinzip ausgestaltete Sensoreinheit ist weitgehend unabhängig von Temperatur- und Helligkeitsschwankungen. Anhand der Sensorsignale mehrerer solcher Sensoren lässt sich die Position des Betätigungselements über Triangulation ermitteln. Anhand mehrerer zeitlich aufeinander folgender Positionen kann eine Bahnkurve bzw. Annäherungsrichtung ermittelt werden, die auch Auskunft darüber gibt, aus welchem Betrachtungswinkelbereich das Betätigungselement angenähert wird. Auch ein Kamera-basiertes System, welches beispielsweise in optischen oder infraroten Wellenlängen arbeitet, kann eingesetzt werden.

In der Regel wird jedoch jeweils nur eines der Betätigungselemente 14, 15 an die Bedienvorrichtung angenähert sein. Bei der beschriebenen Ausführungsform, bei der die Positionen der Betätigungselemente 14, 15 im Raum vor der Anzeigefläche 4 bestimmt werden, können jedoch sowohl der Fahrer 7 als auch der Beifahrer 8 gleichzeitig Betätigungshandlungen vornehmen, die sowohl dem Fahrer 7 als auch dem Beifahrer 8 entsprechend zuordenbar sind, indem die Position des sprechenden Betätigungselements 14 oder 15 mit der entsprechenden Position des betätigten Bedienelements 10-12 oder einem virtuellen Bedienelement auf der Anzeigefläche 4 korreliert wird. Bei einfacheren Ausführungsformen, bei denen lediglich eine Annäherung des Betätigungselements 14 des Fahrers 7 oder des Betätigungselements 15 des Beifahrers 8 ermittelt wird, sind solche Doppelbetätigungen zeitgleich nicht möglich. Um dem Fahrer 7 bzw. dem Beifahrer 8, d.h. einem Nutzer, anzuzeigen, ob die vorgenommene Betätigungshandlung, die mittels eines der Bedienelemente 10-12 oder der Erfassungseinheit 13 erfasst wird, dem Betrachtungswinkelbereich zugeordnet wird, in dem sich der Fahrer 7 bzw. der Beifahrer 8 befindet, ist es vorgesehen, eine Aktivierungsinformation jeweils zumindest in der Darstellung darzustellen, dessen Darstellungswinkelbereich eine Betätigungshandlung zugeordnet wird. Dieses ist insbesondere bei Ausführungsformen notwendig, bei denen eine Zuordnung einer Betätigungshandlung nicht über eine exakte Positionsbestimmung und Korrelation mit der Position des Bedienelements, welches betätigt wird, möglich ist. Die Anzeige der Aktivierungsinformation wird hierbei angezeigt, sobald die Anzeige- und Bedienvorrichtung einen der Nutzer als aktiven Nutzer erkannt hat.

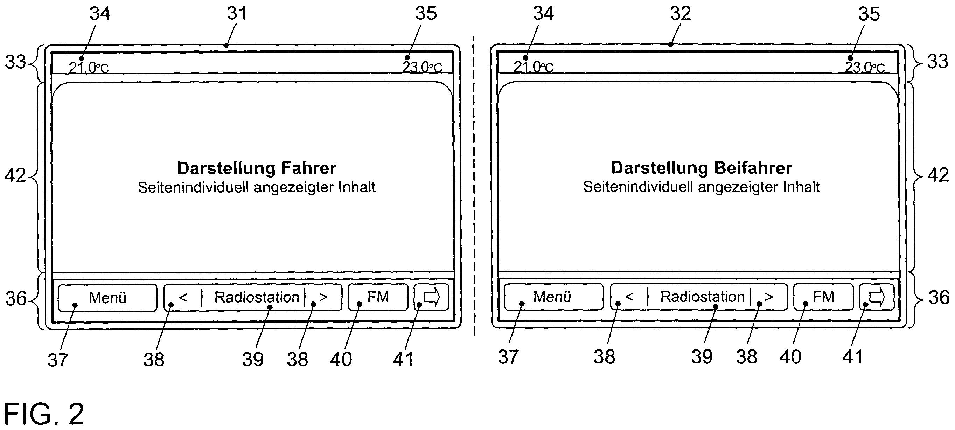

In Fig. 2 sind die unterschiedlichen Darstellungen, die dem Fahrer und dem Beifahrer angezeigt werden, schematisch dargestellt. Die auf der linken Seite befindliche Darstellung 31 ist in dem Betrachtungswinkelbereich zu sehen, in dem sich der Fahrer befindet. Die auf der rechten Seite dargestellte Darstellung 32 ist in dem Betrachtungswinkelbereich zu erkennen, aus dem der Beifahrer die Anzeigefläche betrachtet. In beiden Darstellungen 31, 32 sind in einem oberen Abschnitt 33 Statusinformationen angezeigt. Beispielhaft sind fahrzeugseitenindividuelle Temperaturangaben 34 (für die Fahrerseite) und 35 (für die Beifahrerseite) angezeigt. In einem unteren Abschnitt 36 ist jeweils eine Bedienzeile mit unterschiedlichen virtuellen Bedienelementen, die eine Menütaste 37, zwei Pfeiltasten 38 zum Auswählen einer Radiostation 39, eine Frequenzbereichswahltaste 40 sowie eine Anzeigemodustaste 41 umfasst. Die Anzeigemodustaste 41 ermöglicht es dem Fahrer und dem Beifahrer zwischen einem Mehrdarstellungsmodus, in dem sich die Darstellungen 31 und 32 unterscheiden können, und einem Eindarstellungsmodus umzuschalten, bei dem die in den unterschiedlichen Betrachtungswinkelbereichen angezeigten Darstellungen identisch sind. Die Anzeigemodustaste 41 ist vorzugsweise in allen Darstellungen an derselben Position angeordnet, so dass unabhängig von der Zuordnung einer Betätigungshandlung zu dem entsprechenden Betrachtungswinkelbereich jeweils zuverlässig eine Umschaltung in den Eindarstellungsanzeigemodus auslösbar ist.

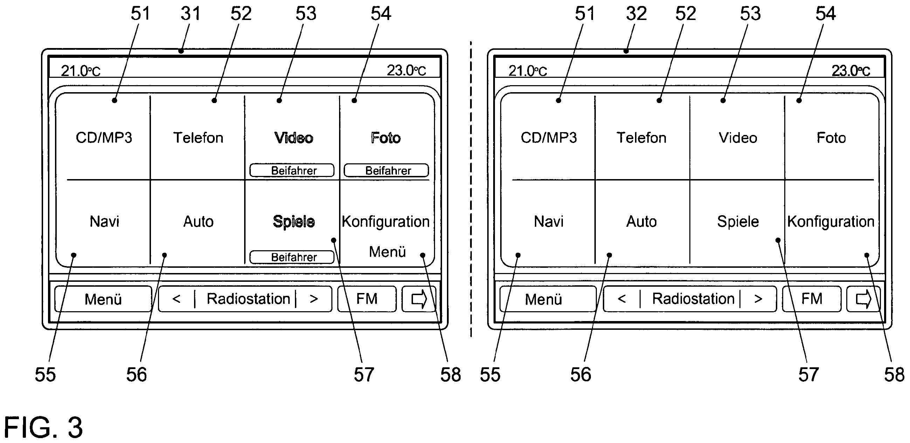

Insbesondere in einem mittleren Bereich 42 unterscheiden sich die angezeigten Informationen der Darstellungen 31 und 32 für den Fahrer und den Beifahrer. In Fig. 3 ist dies beispielhaft dargestellt. In den Darstellungen werden als virtuelle Bedienelemente ausgebildete Menüpunkte 51-58 angezeigt. Die Darstellungen 31' und 32', die dem Fahrer bzw. Beifahrer angezeigt werden, ähneln sich zwar stark, dem Fahrer wird jedoch in den Menüpunkten 53, 54, 57 jeweils noch das Wort Beifahrer zusätzlich eingeblendet, welches andeuten soll, dass diese Menüpunkte nur durch den Beifahrer ausgewählt und aktiviert werden können.

Um kenntlich zu machen, welcher Nutzer hinsichtlich der Betätigung der Bedienelemente der Bedienvorrichtung aktiver Nutzer ist, wird bei einer Annäherung eines Betätigungselements zumindest in der Darstellung, dessen Betrachtungswinkelbereich die Betätigungshandlung zugeordnet wird, eine Aktivierungsinformation dargestellt.

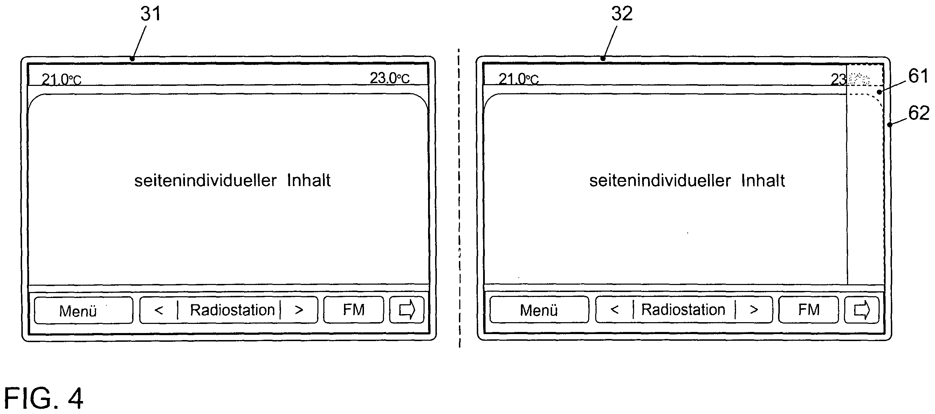

In Fig. 4 ist eine Situation dargestellt, in der der Beifahrer seine Hand der Bedienvorrichtung angenähert hat. In der dem entsprechenden Betrachtungswinkelbereich zugeordneten Darstellung 32, die von der Beifahrerseite des Kraftfahrzeugs aus sichtbar ist, ist beispielsweise mittels eines transparenten Balkens 61 an einer rechten Seite 62 der Darstellung 32 angezeigt, dass der auf der rechten Fahrzeugseite befindliche Beifahrer aktiver Nutzer der Bedienvorrichtung ist. Bei der dargestellten Ausführungsform nach Fig. 4 wird die Aktivierungsinformation für den Fahrer nicht eingeblendet.

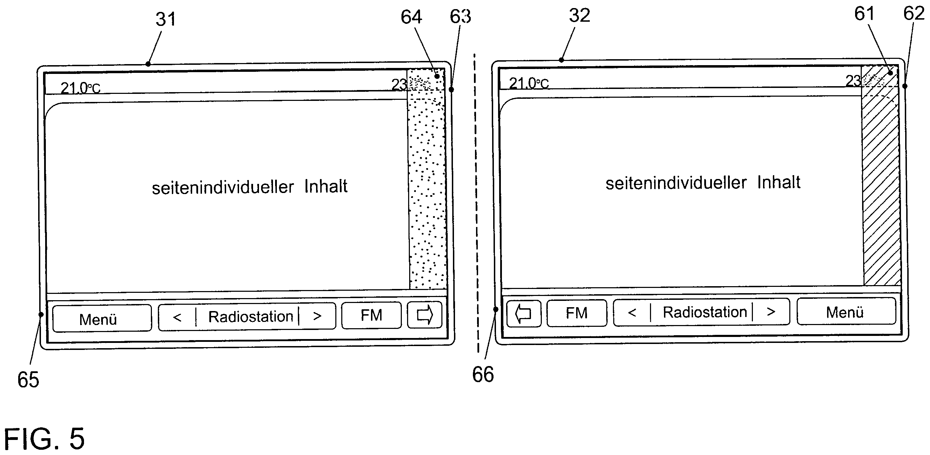

In Fig. 5 ist eine weitere Ausführungsform gezeigt, bei der die Aktivierungsinformation auch für den Fahrer in dessen Darstellung 31 mittels eines an der rechten Seite 63 angeordneten transparenten Balkens 64 dargestellt ist. Würde hingegen der Fahrer als aktiver Nutzer angezeigt, so würden die transparenten Balken 61 bzw. 64 jeweils an einer linken Seite 65, 66 angezeigt. Zusätzlich zu der Position wird vorzugsweise eine farbliche Kennzeichnung der Aktivierungsinformation verwendet. Beispielsweise ist es vorteilhaft, den transparenten Balken 61, 64 jeweils farblich hervorgehoben in der entsprechenden Darstellung anzuzeigen, wenn die in dem entsprechenden Betrachtungswinkelbereich befindliche Person aktiver Nutzer der Bedienvorrichtung ist. Bei dem in Fig. 5 dargestellten Beispiel ist somit der transparente Balken 61 in der Darstellung 32 farblich hervorgehoben (angedeutet durch eine Schraffur), um anzuzeigen, dass der Beifahrer aktiver Nutzer ist. In der Darstellung für den Fahrer 31 ist hingegen der transparente Balken 64 beispielsweise grau dargestellt (angedeutet durch eine gepunktete Textur). Um anzudeuten, dass die angezeigte Aktivierungsinformation nicht den eigenen Betrachtungswinkelbereich als aktiven Bereich bzw. eine darin befindliche Person als aktive Person kennzeichnet, sondern einen anderen Betrachtungswinkelbereich bzw. Nutzer.

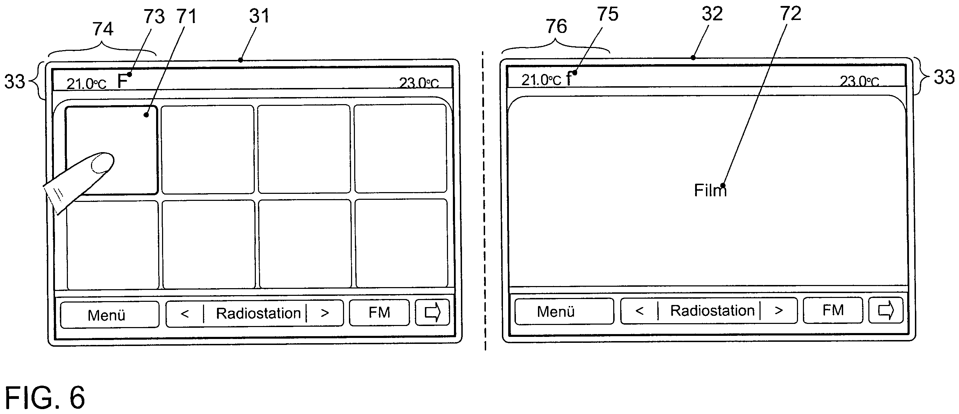

In Fig. 6 sind zwei Darstellungen 31, 32 gezeigt, die für den Fahrer und den Beifahrer unterschiedliche Anzeige- und Bedienkontexte enthalten. Während der Fahrer ein Menü 71 bedient, betrachtet der Beifahrer einen Film 72. Bei dieser Ausführungsform ist die Aktivierungsinformation in der Statuszeile im oberen Abschnitt 33 in beiden Darstellungen 31, 32 dargestellt. Während in der Darstellung 31 des aktiven Fahrers ein Großbuchstabe F 73 farblich hervorgehoben in einem linken Abschnitt 74 dargestellt ist, wodurch angedeutet wird, dass der auf der linken Seite befindliche Fahrer aktiver Nutzer ist, wird die Aktivierungsinformation in der Darstellung 32 des Beifahrers mittels eines Kleinbuchstaben f 75 ebenfalls in einem linken Abschnitt 76 der Statuszeile im oberen Abschnitt 33 angezeigt. Bei dieser Ausführungsform soll noch hervorgehoben werden, dass die im unteren Abschnitt 36 angeordnete Bedienleiste gespiegelt ausgebildet ist. Dies bedeutet, dass die virtuellen Bedienelemente in umgekehrter Reihenfolge dargestellt sind. Hierdurch wird sowohl für den Fahrer als auch für den Beifahrer eine optimale Erreichbarkeit der am häufigsten verwendeten Bedienelemente sichergestellt. Auch bei dieser Ausführungsform könnten jedoch die Bedienelemente in beiden Darstellungen 31, 32 in derselben Reihenfolge angeordnet sein.

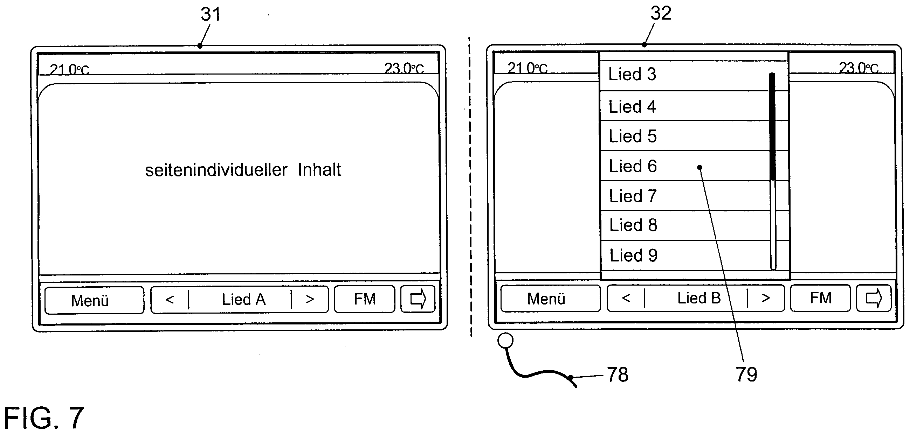

In Fig. 7 ist eine Situation dargestellt, bei der das Audiosystem so ausgebildet ist, dass der Beifahrer Audioinformationen über einen Kopfhörer 78 oder speziell ausgebildete Lautsprecher, d.h. seitenindividuell, ausgegeben erhält. In einer solchen Situation wird bei der Auswahl eines neuen Musiktitels durch den Beifahrer die Auswahlliste 79 der Titel nur in der Darstellung des Beifahrers 32 angezeigt.

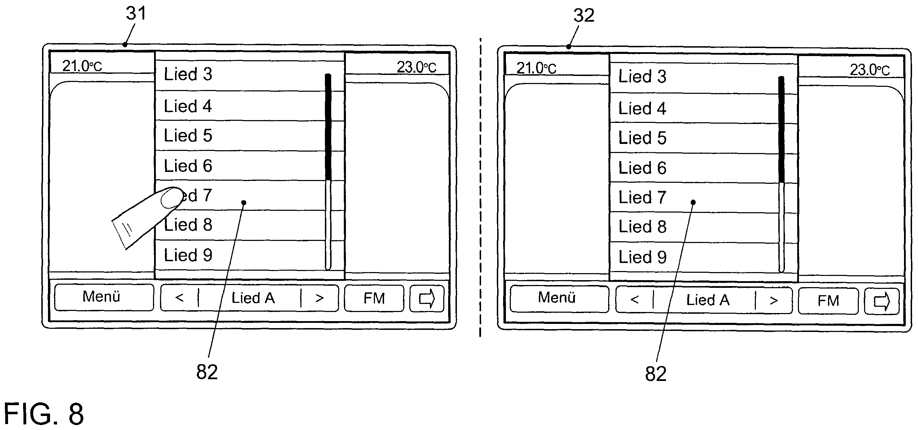

In Fig. 8 ist hingegen eine vergleichbare Situation dargestellt, in der jedoch die Audioausgabe nur für den gesamten Innenraum einstellbar ist. In einer solchen Situation wird bei einer Bedienung sowohl durch den Fahrer oder den Beifahrer jeweils in der anderen Darstellung ebenfalls die Titelliste 82 angezeigt.

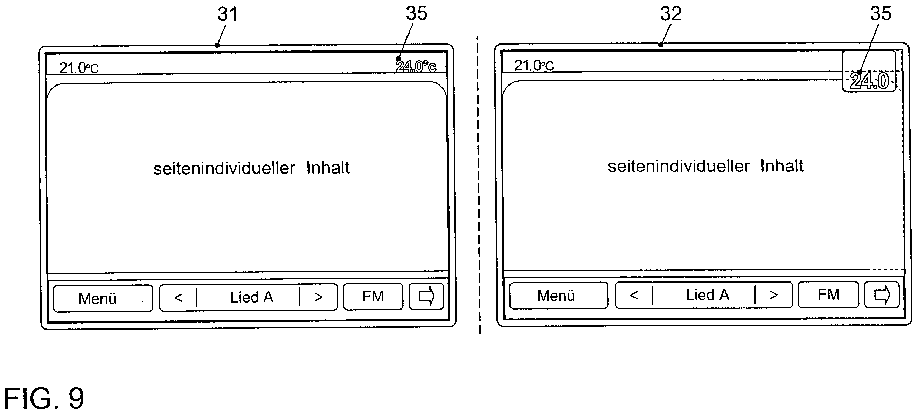

In Fig. 9 sind bevorzugte Darstellungen für eine Situation gezeigt, in der der Beifahrer als aktiver Nutzer die seitenbezogene Innenraumtemperatur auf 24°C erhöht hat. In der Darstellung 32, die dem Beifahrer gezeigt wird, ist die neue Temperaturangabe 35 sowohl farblich als auch durch ihre Größe hervorgehoben dargestellt. In der Darstellung des Fahrers ist diese Änderung jedoch nur farblich, nicht jedoch durch eine Größenänderung der Temperaturangabe dargestellt.

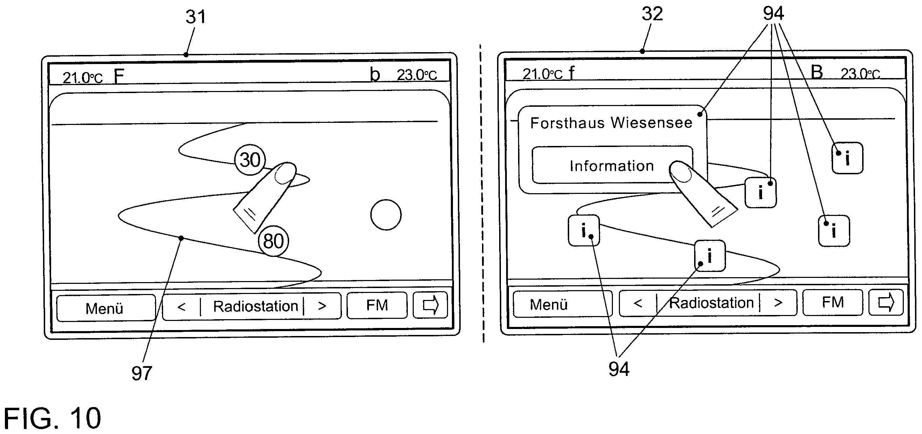

In Fig. 10 sind Darstellungen einer Ausführungsform gezeigt, bei der eine Zuordnung der Betätigungshandlungen über eine exakte Positionsbestimmung der Betätigungselemente und eine Korrelation mit den Bedienelementen der Bedienvorrichtung zur Zuordnung der Betätigungshandlungen zu dem Betrachtungswinkelbereichen vorgenommen wird. In der dargestellten Ausführungsform sind jeweils beide Nutzer über einen Großbuchstaben F in der Darstellung 31 für den Fahrer und einen Großbuchstaben B in der Darstellung 32 für den Beifahrer jeweils als aktive Nutzer gekennzeichnet. Obwohl beide, sowohl der Fahrer als auch der Beifahrer, einen Navigationskontext angezeigt erhalten, unterscheiden sich dennoch die Informationen. Dem Beifahrer werden beispielsweise Punkte von Interesse 94 angezeigt, bei deren Berührung zusätzliche Informationen über diesen entsprechenden Punkt angezeigt werden. Berührt hingegen der Fahrer einen Ort entlang der angezeigten Fahrroute 97, so werden ihm beispielsweise Informationen über Geschwindigkeitsbeschränkungen angezeigt.

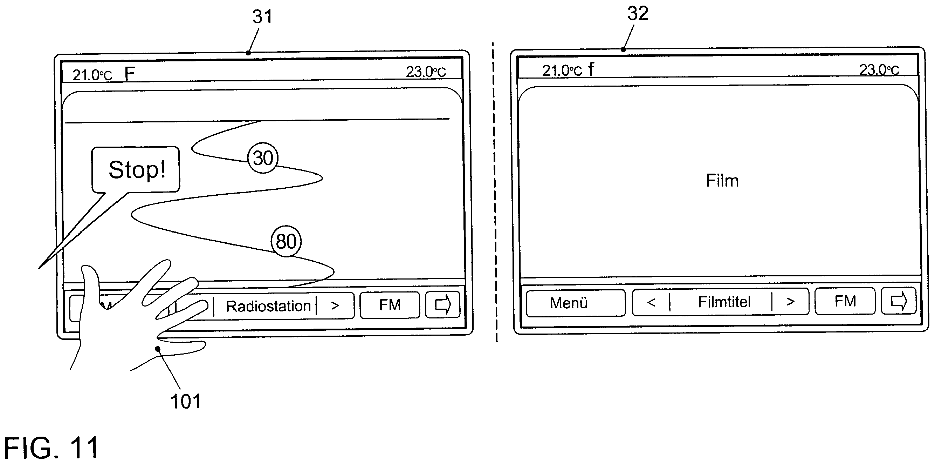

In Fig. 11 sind Darstellungen gezeigt, anhand derer eine sprachunterstützte Bedienung erläutert werden soll. Nähert beispielsweise der Beifahrer seine Hand 101 als Betätigungselement der Bedienvorrichtung an, hier beispielsweise seine Hand der als Touchscreen ausgebildeten Anzeigevorrichtung, so wird er als aktiver Nutzer registriert. Eine von einer Spracherkennungseinheit erfasster und ausgewerteter Stoppbefehl bewirkt in diesem Fall das Beenden der Wiedergabe des betrachteten Films. Nähert hingegen der Fahrer seine Hand der Bedienvorrichtung an, so dass er als aktiver Nutzer der Bedienvorrichtung erkannt wird, so bewirkt ein von der Spracherkennungseinheit erfasster und ausgewerteter Stoppbefehl ein Beenden einer zielgeführten Navigation. Die von der Spracherkennungseinheit erfassten und ausgewerteten Befehle werden somit kontextabhängig ausgewertet. Der Kontext ist jeweils durch den dargestellten Anzeige- und Bedienkontext festgelegt, der dem aktiven Nutzer, d.h. dem Nutzer, angezeigt wird, dessen Betrachtungswinkelbereich eine Betätigung der Bedienvorrichtung, hier der Spracherkennungseinheit, zugeordnet wird.

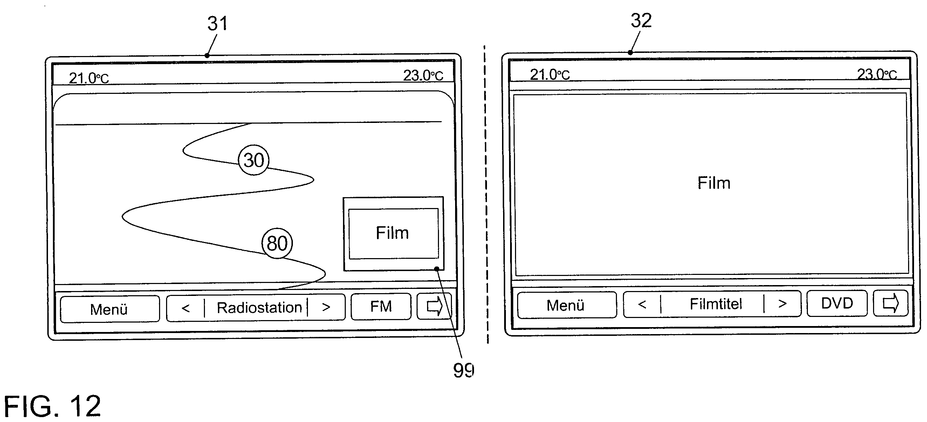

Fig. 12 zeigt eine Ausführungsform, bei der dem Fahrer die Möglichkeit gegeben ist, in einem kleinen Ausschnitt 99 der Darstellung 31 sich die Darstellung 32 des Beifahrers anzeigen zu lassen. So ist es einem Fahrer beispielsweise möglich, einem Beifahrer zu erläutern, welche Handlungen er vornehmen muss, um eine entsprechende Bedienung ausführen zu können. Dieses ist insbesondere in solchen Situationen von Vorteil, in denen der Fahrer eine Person als Beifahrer mitnimmt, die sich mit der Bedienung des Kraftfahrzeugs des Fahrers nicht auskennt.

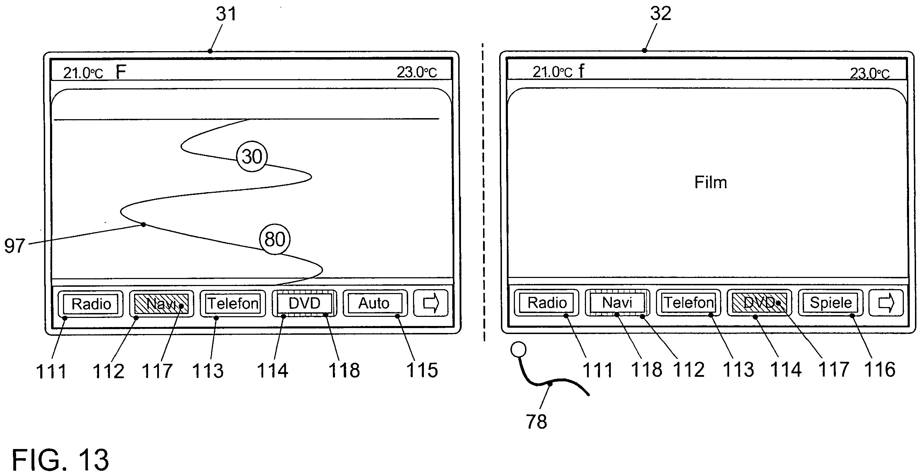

In Fig. 13 ist eine Ausführungsform dargestellt, in der in dem unteren Abschnitt 36 der Darstellung für jeden Bedienkontext jeweils ein virtuelles Bedienelement 111-116 vorgesehen ist. Bei einer bevorzugten Ausführungsform sind die Darstellungen 31 und 32 so ausgestaltet, dass sowohl der dem jeweiligen Betrachtungswinkelbereich angezeigte Anzeige- und Bedienkontext über eine farbliche Kennzeichnung (Schraffur des Zentrums 117) des entsprechenden virtuellen Bedienelements als auch über eine andere Kennzeichnung (andere Schraffur des Randes 118) desselben oder eines anderen virtuellen Bedienelements 111-116 der Anzelgekontext in der jeweils anderen Darstellung, die dem Betrachtungswinkelbereich des anderen Nutzers zugeordnet ist, kenntlich gemacht ist. Genau so eine Kennzeichnung kann auch an in Hardware ausgeführte Bedienelemente vorgesehen sein.

Die beschriebenen Ausführungsformen sind selbstverständlich lediglich beispielhaft. Wie der Fachmann leicht erkennt, sind vielfältige andere Ausgestaltungsmöglichkeiten der Erfindung möglich.

### Bezugszeichenliste

- 1: Kraftfahrzeug
- 2: Anzeige- und Bediensystem
- 3: Anzeigevorrichtung
- 4: Anzeigefläche
- 5: Betrachtungswinkelbereich
- 6: Betrachtungswinkelbereich
- 7: Fahrer
- 8: Beifahrer
- 9: Bedienvorrichtung
- 10-12: Bedienelemente
- 13: berührungsempfindliche positionsbestimmende Erfassungseinheit
- 14: Betätigungselement (Fahrer)
- 15: Betätigungselement (Beifahrer)
- 16: Detektionseinheit
- 17, 18: HF-Signalgeber
- 19: Fahrersitz
- 20: Beifahrersitz
- 21-24: Sensoren
- 25: Auswerteeinheit
- 31: Darstellung (für Fahrer)
- 32: Darstellung (für Beifahrer)
- 33: oberer Abschnitt
- 34: Temperaturangabe (Fahrerseite)
- 35: Temperaturangabe (Beifahrerseite)
- 36: unterer Abschnitt
- 37: Menütaste
- 38: Pfeiltasten
- 39: Radiostation
- 40: Frequenzbereichswahltaste
- 41: Anzeigemodustaste
- 42: mittlerer Bereich
- 51-58: Menüpunkte
- 61: transparenter Balken
- 62: rechte Seite
- 63: rechte Seite
- 64: transparenter Balken
- 65: linke Seite
- 66: linke Seite
- 71: Menü
- 72: Film
- 73: Großbuchstabe F
- 74: linker Abschnitt
- 75: Kleinbuchstabe f
- 76: linker Abschnitt
- 78: Kopfhörer
- 79: Auswahlliste
- 82: Titelliste
- 94: Punkt von Interesse
- 97: Fahrroute
- 99: Ausschnitt
- 101: Hand
- 111-116: virtuelle Bedienelemente
- 117: Zentrum
- 118: Rand

## Patentansprüche

1. Anzeige- und Bediensystem (2) für ein Kraftfahrzeug (1) umfassend eine Multi-View-Anzeigevorrichtung (3), mittels der zeitgleich mindestens zwei unterschiedliche Darstellungen (31, 32) für eine Betrachtung aus unterschiedlichen Betrachtungswinkelbereichen anzeigbar sind, eine Bedienvorrichtung (9) zum Erfassen von Nutzereingaben und eine Detektionseinheit (16), die eine Annäherung eines Betätigungselements (14, 15) an die Bedienvorrichtung (9) detektiert und das Betätigungselement (14, 15) einem der Betrachtungswinkelbereiche (5, 6) zuordnet, so dass eine mittels der Bedienvorrichtung (9) erfasste Betätigungshandlung des Betätigungselements (14, 15) ebenfalls einem der unterschiedlichen Betrachtungswinkelbereiche (5, 6) zuordenbar ist,
**dadurch gekennzeichnet, dass**
gleichzeitige Betätigungshandlungen aus mehreren Betrachtungswinkelbereichen möglich sind,
wobei eine Zuordnung der Betätigungshandlungen über eine exakte Positionsbestimmung der Betätigungselemente und eine Korrelation mit den Bedienelementen der Bedienvorrichtung zur Zuordnung der Betätigungshandlungen zu den Betrachtungswinkelbereichen vorgenommen wird, und
wobei eine die Zuordnung des Betrachtungswinkelbereichs (5, 6) kennzeichnende Aktivierungsinformation jeweils in der Darstellung des Betrachtungswinkelbereichs (5, 6) grafisch angezeigt ist, für dessen Betätigungselement (14, 15) eine Position von einer Position eines anderen Betätigungselements (14, 15) ausreichend unterschiedlich erfasst wird, so dass eine Zuordnung zu einem Bedienelement (10-12) der Bedienvorrichtung (9) eindeutig über die Position des Betätigungselements möglich ist,
wobei die Aktivierungsinformation nur eingeblendet wird, wenn die Annäherung des Betätigungselements (14, 15) an die Bedienvorrichtung (9) detektiert und einem der Betrachtungswinkelbereiche (5, 6) zugeordnet ist, dem eine erfolgende Betätigungshandlung der Bedienvorrichtung (9) zugeordnet wird.

2. Anzeige- und Bediensystem (2) nach einem der genannten Ansprüche, **dadurch gekennzeichnet, dass** die Anzeige der Zuordnung über die Aktivierungsinformation jeweils an einer Position in den Darstellungen (31, 32) bezüglich einem Mittelpunkt der entsprechenden Darstellung erfolgt, die einer Betrachtungsposition bezogen auf einen Mittelpunkt der Anzeigefläche in dem entsprechenden der Darstellung zugeordneten Betrachtungswinkelbereich (5, 6) in einer parallel zur Anzeigefläche ausgebildeten Betrachtungsebene korrespondiert.

3. Anzeige- und Bediensystem (2) nach einem der genannten Ansprüche, **dadurch gekennzeichnet, dass** die Bedienvorrichtung (9) eine berührungsempfindliche positionsbestimmende Erfassungseinheit umfasst, die gemeinsam mit der Anzeigefläche zu einem Touchscreen gekoppelt ist.

4. Anzeige- und Bediensystem (2) nach Anspruch 3, **dadurch gekennzeichnet, dass** in jeder der mindestens zwei Darstellungen (31, 32) an derselben Darstellungsposition auf der Anzeigefläche ein virtuelles Bedienelement (10-12) angezeigt ist, mittels dessen Betätigung zwischen einem Mehrdarstellungsmodus, in dem in jeder der mindestens zwei Darstellungen (31, 32) unterschiedliche Informationen anzeigbar sind, und einem Eindarstellungsmodus umgeschaltet werden kann, in dem in jeder der mindestens zwei Darstellungen (31, 32) dasselbe angezeigt wird.

5. Anzeige- und Bediensystem (2) nach einem der genannten Ansprüche, **dadurch gekennzeichnet, dass** Informationen über Funktionen die den Fahrzeuginnenraum beeinflussen, jeweils in jeder der mindestens zwei Darstellungen (31, 32) angezeigt werden.

6. Anzeige- und Bediensystem (2) nach einem der genannten Ansprüche, **dadurch gekennzeichnet, dass** die Bedienvorrichtung (9) ein Mikrofon und eine Spracherkennungseinheit umfasst, wobei mittels der Spracherkennungseinheit erfasste Betätigungshandlungen dem Betrachtungswinkelbereich (5, 6) zugeordnet werden, dem das Betätigungselement zugeordnet wird, das an die positionsbestimmende Erfassungseinheit oder ein anderes Bedienelement (10-12) der Bedienvorrichtung (9) angenähert ist, das in einem Detektionsbereich der Detektionseinheit angeordnet ist.

7. Anzeige- und Bediensystem (2) nach einem der genannten Ansprüche, **dadurch gekennzeichnet, dass** Statusinformationen, die jeweils in allen der mindestens zwei Darstellungen (31, 32) angezeigt werden und die den Fahrzeuginnenraum nur seitenindividuell betreffen, bei einer Veränderung in der Darstellung des Betrachtungswinkelbereichs (5, 6), der mit der beeinflussten Fahrzeugseite korrespondiert, stärker optisch hervorgehoben werden als in den übrigen der mindestens zwei Darstellungen (31, 32).

8. Anzeige- und Bediensystem (2) nach einem der vorangehenden Ansprüche, **dadurch gekennzeichnet, dass** die Detektionseinheit mehrere Sensoreinheiten umfasst, so dass eine Position eines sich annähernden Betätigungselementes zusätzlich im Raum bestimmbar ist, so das eine mittels der Bedienvorrichtung (9) erfasste Betätigungshandlung über die ermittelte Position des Betätigungselements (14, 15) relativ zu der Bedienvorrichtung (9) über eine Korrelation mit Bedienelementpositionen einem der Betrachtungswinkelbereiche (5, 6) zuordenbar oder zugeordnet ist.

## Claims

1. Display and operator control system (2) for a motor vehicle (1) comprising a multiview display apparatus (3) that can be used to simultaneously display at least two different presentations (31, 32) for viewing from different viewing angle ranges, an operator control apparatus (9) for sensing user inputs and a detection unit (16) that detects an approach by an operating element (14, 15) to the operator control apparatus (9) and associates the operating element (14, 15) with one of the viewing angle ranges (5, 6), so that an operating action by the operating element (14, 15) that is sensed by means of the operator control apparatus (9) is likewise associable with one of the different viewing angle ranges (5, 6), **characterized in that**
simultaneous operating actions from multiple viewing angle ranges are possible,
wherein the operating actions are associated by means of exact position determination for the operating elements and correlation with the operator control elements of the operator control apparatus in order to associate the operating actions with the viewing angle ranges, and
wherein a piece of activation information denoting the association of the viewing angle range (5, 6) is graphically displayed in a respective presentation of the viewing angle range (5, 6) for whose operating element (14, 15) a position is sensed sufficiently differently from a position of another operating element (14, 15), so that an association with an operator control element (10, 12) of the operator control apparatus (9) is possible explicitly by means of the position of the operating element,
wherein the piece of activation information is shown only when the approach by the operating element (14, 15) to the operator control apparatus (9) is detected and associated with one of the viewing angle ranges (5, 6) that has an operating action effected on the operator control apparatus (9) associated with it.

2. Display and operator control system (2) according to one of the cited claims, **characterized in that** the display of the association by means of the piece of activation information is effected at a respective position in the presentations (31, 32) relative to a centre of the relevant presentation that corresponds to a viewing position based on a centre of the display panel in the relevant viewing angle range (5, 6) associated with the presentation in a viewing plane formed parallel to the display panel.

3. Display and operator control system (2) according to either of the cited claims, **characterized in that** the operator control apparatus (9) comprises a touch-sensitive position-determining sensing unit that is coupled to a touch screen together with the display panel.

4. Display and operator control system (2) according to Claim 3, **characterized in that** in each of the at least two presentations (31, 32), at the same presentation position on the display panel, a virtual operator control element (10-12) is displayed that, when operated, can be used to change over between a multiple presentation mode, in which different information is displayable in each of the at least two presentations (31, 32), and a single presentation mode, in which the same is displayed in each of the at least two presentations (31, 32).

5. Display and operator control system (2) according to one of the cited claims, **characterized in that** information about functions that influence the vehicle interior is displayed in each of the at least two presentations (31, 32) in each case.

6. Display and operator control system (2) according to one of the cited claims, **characterized in that** the operator control apparatus (9) comprises a microphone and a voice recognition unit, wherein operating actions sensed by means of the voice recognition unit are associated with the viewing angle range (5, 6) with which is associated the operating element that has approached the position-determining sensing unit or another operator control element (10-12) of the operator control apparatus (9), that is arranged in a detection area of the detection unit.

7. Display and operator control system (2) according to one of the cited claims, **characterized in that** status information that is displayed in all of the at least two presentations (31, 32) in each case and that relates to the vehicle interior only on individual sides is visually highlighted to a greater extent in the event of a change in the presentation of the viewing angle range (5, 6) that corresponds to the influenced vehicle side than in the other(s) of the at least two presentations (31, 32).

8. Display and operator control system (2) according to one of the preceding claims, **characterized in that** the detection unit comprises multiple sensor units, so that a position of an approaching operator element is additionally determinable in space, so that an operating action sensed by means of the operator control apparatus (9) is associable or associated with one of the viewing angle ranges (5, 6) by means of the ascertained position of the operating element (14, 15) relative to the operator control apparatus (9) using a correlation with operator control element positions.

## Revendications

1. Système de visualisation et de commande (2) pour véhicule automobile (1), comprenant un dispositif de visualisation multivues (3), au moyen duquel au moins deux différentes représentations (31, 32) d'une vue observée peuvent être visualisées simultanément à partir de différentes zones angulaires d'observation, un dispositif de commande (9) pour détecter des données utilisateur et une unité de détection (16) qui détecte le rapprochement d'un élément d'actionnement (14, 15) du dispositif de commande (9) et associe l'élément d'actionnement (14, 15) à l'une des zones angulaires d'observation (5, 6), de sorte qu'une manipulation d'actionnement de l'élément d'actionnement (14, 15), détectée au moyen du dispositif de commande (9), puisse également être associée à l'une des différentes zones angulaires d'observation (5, 6),
**caractérisé en ce que** des manipulations d'actionnement simultanées sont possibles à partir de plusieurs zones angulaires d'observation,
dans lequel une association des manipulations d'actionnement par l'intermédiaire d'une détermination exacte de la position des éléments d'actionnement et une corrélation avec les éléments d'actionnement du dispositif de commande sont effectuées pour associer les manipulations d'actionnement aux zones angulaires d'observation, et
dans lequel une information d'activation caractérisant l'association de la zone angulaire d'observation (5, 6) est respectivement affichée graphiquement dans la représentation de la zone angulaire d'observation (5, 6), zone angulaire d'observation dont l'élément d'actionnement (14, 15) possède une position qui est détectée de manière suffisamment différente d'une position d'un autre élément d'actionnement (14, 15), de manière à ce qu'une association à un élément de commande (10 - 12) du dispositif de commande (9) soit possible de manière unique à la position de l'élément d'actionnement,
dans lequel l'information d'activation n'est incorporée que lorsque le rapprochement de l'élément d'actionnement (14, 15) du dispositif de commande (9) est détecté et est associé à l'une des zones angulaires d'observation (5, 6) à laquelle est associée une manipulation d'actionnement subséquente du dispositif de commande (9).

2. Système d'affichage et de commande (2) selon l'une quelconque des revendications précédentes, **caractérisé en ce que** l'affichage de l'association est respectivement effectué par l'intermédiaire de l'information d'activation à une position, dans la représentation (31, 32) par rapport à un centre de la représentation correspondante, qui correspond à une position d'observation par rapport à un centre de la surface d'affichage, dans la zone angulaire d'observation (5, 6) correspondante associée à la représentation dans un plan d'observation formé parallèlement à la surface d'affichage.

3. Système d'affichage et de commande (2) selon l'une quelconque des revendications précédentes, **caractérisé en ce que** le dispositif de commande (9) comprend une unité de détection tactile déterminant la position, qui est couplée en commun avec la surface d'affichage à un écran tactile.

4. Système d'affichage et de commande (2) selon la revendication 3, **caractérisé en ce qu'**un élément de commande virtuel (10 - 12) est affiché sur la surface d'affichage dans chacune des au moins deux représentations (31, 32) à la même position de représentation, l'actionnement dudit élément de commande virtuel pouvant être amené à basculer entre un mode à représentations multiples dans lequel des informations différentes peuvent être affichées dans chacune des au moins deux représentations (31, 32), et un mode à une seule représentation dans lequel la même information est affichée dans chacune des au moins deux représentations (31, 32).

5. Système d'affichage et de commande (2) selon l'une quelconque des revendications précédentes, **caractérisé en ce que** des informations concernant des fonctions ayant un effet sur l'espace intérieur du véhicule sont respectivement affichées dans chacune des au moins deux représentations (31, 32).

6. Système d'affichage et de commande (2) selon l'une quelconque des revendications précédentes, **caractérisé en ce que** le dispositif de commande (9) comprend un microphone et une unité de reconnaissance vocale, dans lequel des manipulations de commande détectées au moyen de l'unité de reconnaissance vocale sont associées à la zone angulaire d'observation (5, 6) à laquelle est associé l'élément d'actionnement qui est amené à se rapprocher de l'unité de détection déterminant la position ou d'un autre élément d'actionnement (10 - 12) du dispositif de commande (9), qui est disposé dans une zone de détection de l'unité de détection.

7. Système d'affichage et de commande (2) selon l'une quelconque des revendications précédentes, **caractérisé en ce que** des informations d'état, qui sont respectivement affichées dans la totalité des au moins deux représentations (31, 32) et qui ne concernent que des parties individuelles de l'espace intérieur du véhicule, lors d'une modification, effectuée dans la représentation de la zone angulaire d'observation (5, 6), qui correspond à la partie concernée du véhicule, est optiquement mise en surbrillance plus fortement que dans les au moins deux représentations (31, 32) restantes.

8. Système d'affichage et de commande (2) selon l'une quelconque des revendications précédentes, **caractérisé en ce que** l'unité de détection comprend plusieurs unités à capteurs de sorte qu'une position d'un élément d'actionnement se rapprochant puisse en outre être déterminée dans l'espace, afin qu'une manipulation d'actionnement détectée au moyen du dispositif de commande (9) à la position déterminée de l'élément d'actionnement (14, 15) par rapport au dispositif de commande (9) puisse être ou soit associée à l'une des zones angulaires d'observation (5, 6) par l'intermédiaire d'une corrélation avec des positions de l'élément de commande.
